(19) **Europäisches Patentamt European Patent Office Office européen des brevets**

(11) **EP 1 842 837 B1**

(12) **FASCICULE DE BREVET EUROPEEN**

(45) Date de publication et mention
de la délivrance du brevet:
**16.11.2011 Bulletin 2011/46**

(51) Int Cl.:
**C04B 35/26** *(2006.01)*

(21) Numéro de dépôt: **07105068.6**

(22) Date de dépôt: **28.03.2007**

(54) **Materiau ferrite à faibles pertes et à basse temperature de frittage, procédé de fabrication et composant magnetique comportant ledit materiau ferrite**

Ferritmaterial mit schwachen Verlusten und niedriger Sintertemperatur, Herstellungsverfahren und magnetische Komponente, die dieses Ferritmaterial enthält

Ferrite material with little loss and low sintering temperature, manufacturing method and magnetic compound comprising said ferrite material

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **05.04.2006 FR 0602998**

(43) Date de publication de la demande:
**10.10.2007 Bulletin 2007/41**

(73) Titulaire: **THALES**
**92200 Neuilly sur Seine (FR)**

(72) Inventeurs:
• **Lebourgeois, Richard**
**91190, Gif sur Yvette (FR)**
• **Pate, Michel**
**91620, Nozay (FR)**
• **Thomas, Philippe**
**94150, Rungis (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2002 175 311**

**Description**

La présente invention concerne des matériaux ferrites utilisés à haute et très haute fréquence (entre 1 MHz et 100 MHz) et plus particulièrement des matériaux présentant de faibles pertes magnétiques pour des puissances appliquées importantes. Ces matériaux sont plus particulièrement destinés à être intégrés dans des alimentations à découpage haute fréquence ou des amplificateurs de puissance radiofréquence. Leurs avantages sont une faible température de frittage (T < 1000° C), une perméabilité ajustable entre 100 et 1000, de faibles pertes magnétiques à haute et très haute fréquence et un coût de fabrication réduit. Les ferrites décrits dans la présente invention sont particulièrement adaptés pour la réalisation de noyaux magnétiques faibles pertes pour des applications de fortes puissances volumiques (10 à 100 W/cm$^3$), des applications à haute fréquence, des applications très large bande de fréquence ou des applications d'électronique intégrée dans la gamme de fréquence des radiocommunications.

Actuellement, le développement des matériels électroniques, tant dans les applications civiles que militaires, est lié à la miniaturisation des composants passifs et actifs. Parmi ces composants, les plus volumineux sont les composants passifs qui réalisent les fonctions résistance, capacité, inductance ou transformateur, et plus particulièrement les composants passifs inductifs (inductance ou transformateur). Ces composants sont réalisés à partir d'un noyau magnétique en matériau magnétique et d'un ou plusieurs bobinages, le plus souvent en fil de cuivre. L'intégration du ou des bobinages est compliqué et coûteux. De plus, le bobinage se trouve systématiquement à l'extérieur du noyau magnétique ce qui peut à haute fréquence produire des rayonnements parasites risquant de perturber l'électronique environnante.

Pour éliminer ces problèmes, une solution consiste à noyer le ou les bobinages dans la partie magnétique. Pour cela, il est indispensable de pouvoir cofritter les parties métalliques du bobinage avec le ferrite. Le métal du bobinage doit avoir des conductivités électriques élevées de façon à minimiser les pertes par effet Joule. Les meilleurs métaux sont le cuivre utilisés dans la majorité des cas sous forme de fil émaillé. Si l'on désire cofritter le ferrite avec du cuivre, il est nécessaire de réduire l'atmosphère de frittage en injectant par exemple de l'azote dans le four ou tout autre gaz réducteur pour empêcher l'oxydation du cuivre. Le ferrite est alors réduit ce qui dégrade ses propriétés électromagnétiques et son taux de réduction dépend de la température de frittage : plus cette température est basse, moins le ferrite est réduit. Les matériaux ferrite de la présente invention présentent l'avantage de pouvoir être frittés à très basse température (850 voire 800°C) ce qui permet d'envisager des cofrittages avec du cuivre sous atmosphère réductrice sans dégrader ses performances. De plus, la basse température de frittage permet de limiter les réactions d'interdiffusion entre le cuivre et le ferrite et donc de conserver à la fois les propriétés initiales du ferrite et du cuivre.

Dans les applications « fort niveau » qui mettent en oeuvre de fortes puissances électriques, les pertes du composant inductif sont déterminées essentiellement par les pertes magnétiques dites pertes totales du matériau magnétique utilisé pour la réalisation du noyau. Dans la gamme des hautes fréquences (f > 1,5 MHz), on utilise pour ces applications des ferrites de nickel-zinc en raison de leurs propriétés magnétiques adaptées et de leur résistivité électrique élevée.

Selon l'art connu, les ferrites « faibles pertes » destinés aux applications haute fréquence (f > 1 MHz) sont généralement des ferrites de nickel-zinc de formule chimique $Ni_xZn_yFe_2O_4$ avec x + y = 1. Ils sont utilisés comme noyaux magnétiques de formes variées (tores, pots, bâtonnets, etc.) permettant la réalisation d'inductances ou de transformateurs bobinés, la partie bobinage étant réalisée à l'aide de fil de cuivre émaillé ou de conducteur coaxial.

Les performances de ces composants sont souvent limitées par les pertes totales du ferrite qui de ce fait déterminent les dimensions du composant et la puissance électrique incidente admissible.

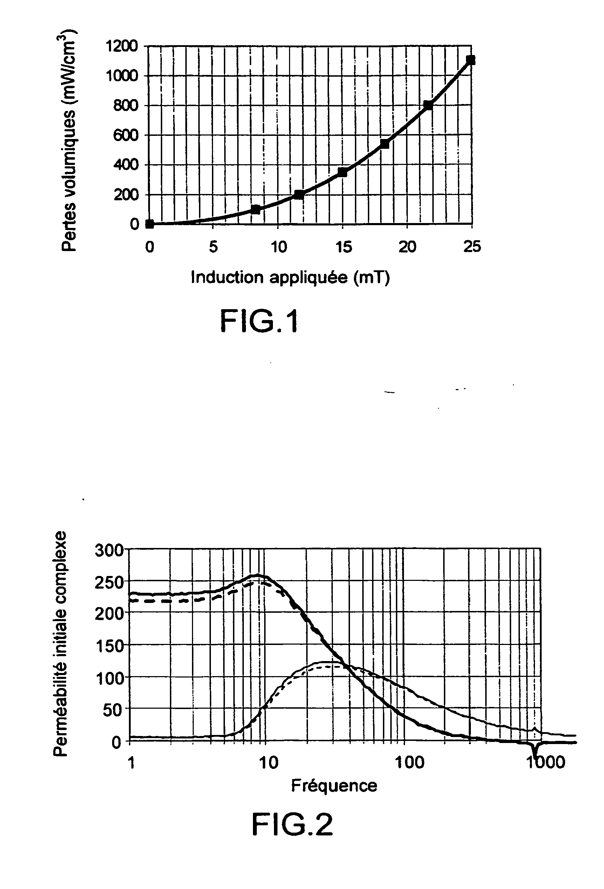

La Figure 1 indique les performances typiques d'un ferrite nickel-zinc commercial optimisé pour des fonctionnements à haute et très haute fréquence. Elle représente la variation des pertes totales mesurées à 1,5 MHz en fonction de l'induction et à température ambiante. La mesure est effectuée sur un tore bobiné à l'aide d'un fil de cuivre émaillé. La perméabilité initiale statique du ferrite vaut 350. La composition chimique de ce ferrite est $Ni_{0,5}Zn_{0,5}Fe_2O_4$.

La présente invention propose dans ce contexte une nouvelle famille de matériau ferrite présentant de faibles pertes magnétiques aussi bien à bas niveau d'induction qu'à fort niveau d'induction (de 0,1 mT à 50 mT) et ce à haute et très haute fréquence (de l'ordre de 1 à 100 MégaHertz) et de très basses températures de frittage. Ces ferrites contiennent du nickel, du zinc du cuivre, du cobalt, du magnésium et du manganèse.

Plus précisément l'invention a pour objet un matériau ferrite de type spinelle à base de nickel et de zinc caractérisé en ce qu'il répond à la formule chimique suivante :

$$Ni_xMn_yZn_zMg_mCu_wCo_\varepsilon Fe_{2-\delta}O_4$$

avec

$$2 (x + y + z + m + w + \varepsilon) + 3 (2 - \delta) = 8$$

$0 < x < 0,8$
$0 < \delta \leq 0,06$
$0,005 \leq \varepsilon \leq 0,1$
$0,05 \leq z \leq 0,6$
$0,005 < y < 0,1$
$0,005 < m < 0,1$
$0,1 < w < 0,25$

Le matériau composite comprenant en outre de l'oxyde de vanadium.

Avantageusement la proportion y en manganèse peut être comprise entre environ 0,01 et 0,05.

Avantageusement la proportion m en magnésium peut être comprise entre environ 0,01 et 0,05

Avantageusement le ratio pondéral oxyde de vanadium / matériau ferrite peut être compris entre 0,2 % et 1 %

L'invention a aussi pour objet un composant magnétique comprenant un noyau magnétique en matériau ferrite spinelle selon l'invention.

Avantageusement le composant magnétique peut être utilisé pour des applications à des hautes fréquences supérieures à environ 1 MégaHertz.

Avantageusement le composant magnétique proposé dans l'invention peut être une inductance ou un transformateur comprenant un noyau bobiné avec notamment du cuivre émaillé ou du conducteur coaxial.

Avantageusement le composant magnétique proposé dans l'invention peut être une inductance ou un transformateur comprenant un ensemble cofritté constitué de ferrite et de cuivre ou d'argent.

Typiquement les inductances ou les transformateurs selon l'invention peuvent être utilisés dans des gammes de fréquences comprises entre environ 1 et 100 MégaHertz.

L'invention a aussi pour objet un composant magnétique caractérisé en ce qu'il fonctionne pour une induction comprise entre environ 0 et 50 m Testa dans une gamme de fréquence de l'ordre de 1 à 100 MégaHertz.

L'invention a encore pour objet une alimentation à découpage où un convertisseur d'énergie électrique utilisant une inductance ou un transformateur selon l'invention.

L'invention a aussi pour objet un procédé de fabrication d'un matériau ferrite selon l'invention caractérisé en ce qu'il comprend les étapes suivantes :

- le pesage des matières premières de types oxydes ou carbonates pour obtenir la composition du matériau ferrite de type spinelle selon l'invention
- le mélange et un premier broyage des matières premières en jarres ou par attrition ;
- le chamottage à une température comprise entre environ 700 et 850°C, en une seule ou plusieurs étapes ;
- un second broyage de la poudre obtenue, suivi d'un pressage ;
- le frittage de ladite poudre rebroyée à une température comprise entre environ 800°C et 950°C.

L'invention a également pour objet un procédé de fabrication du matériau, caractérisé en ce qu'il comprend les étapes suivantes :

- le pesage des matières premières de types oxydes ou carbonates pour obtenir la composition du matériau ferrite de type spinelle selon l'invention
- le mélange et un premier broyage des matières premières ;
- le chamottage à une température comprise entre environ 700 et 850°C, en une seule ou plusieurs étapes ;
- un second broyage de la poudre obtenue ;
- le mélange de ladite poudre rebroyée avec des produits organiques (liants, défloculants, surfactants...) pour la réalisation d'une pâte ;
- le dépôt en couche épaisse de cette pâte par coulage ou sérigraphie ;
- la réalisation d'une structure multicouche constituée d'un empilement de couches de matériau ferrite, de diélectrique et de métal (argent, argent-palladium, or) ;
- le frittage de ladite structure multicouche à une température comprise entre 800 et 950°C.

Le procédé selon l'invention comprend l'ajout d'un fondant sous forme de $V_2O_5$

Cette opération peut être réalisée après le second broyage, à sec ou en milieu humide, ou avant le second broyage en milieu humide

L'invention sera mieux comprise et d'autres avantages apparaîtront à la lecture de la description qui va suivre donnée à titre non limitatif et grâce aux figures annexées parmi lesquelles :

- la figure 1 représente la variation des pertes totales mesurées à 1,5 MégaHertz, en fonction de l'induction à température ambiante d'un transformateur bobiné comprenant un ferrite classique de l'art antérieur de formule chimique $Ni_{0,35}Zn_{0,65}Fe_2O_4$ ;
- la figure 2 représente la perméabilité initiale complexe ( valeur réelle et valeur imaginaire) en fonction de la fréquence pour différentes valeurs de composition δ dans le ferrite répondant à la formule chimique $Ni_{0.234}Zn_{0.545}Cu_{0.2}Co_{0.02}Fe_{2-\delta}O_4$
- La figure 3 représente les pertes totales volumiques en fonction de l'induction pour différentes valeurs de composition δ dans le ferrite répondant à la formule chimique $Ni_{0.234}Zn_{0.545}Cu_{0.2}Co_{0.02}Fe_{2-\delta}O_4$
- La figure 4 représente la perméabilité initiale complexe en fonction de la fréquence avec le matériau ferrite répondant à la formule chimique $Ni_{0.234}Zn_{0.545}Cu_{0.2}Co_{0.02}Fe_{2-\delta}O_4$ dans lequel δ est égal à 0,0125 et fritté à différentes températures
- La figure 5 représente les pertes totales en fonction de l'induction avec le matériau ferrite répondant à la formule chimique $Ni_{0.234}Zn_{0.545}Cu_{0.2}Co_{0.02}Fe_{2-\delta}O_4$ dans lequel δ est égal à 0,0125 et fritté à différentes températures

De manière générale le matériau ferrite selon l'invention répond à la formule chimique $Ni_xMn_yZn_zMg_mCu_wCo_\varepsilon Fe_{2-\delta}O_4$.

Ce matériau peut être obtenu selon un procédé d'élaboration de l'art connu et notamment décrit dans le brevet EP 0800183.

La première partie du procédé d'élaboration consiste à obtenir une poudre de ferrite selon les étapes suivantes :

Pesée des matières premières suivantes :

Oxyde de nickel (NiO), oxyde de zinc (ZnO), oxyde de fer ($Fe_2O_3$) oxyde de cuivre (CuO), oxyde de cobalt ($Co_3O_4$), oxyde de manganèse ($Mn_3O_4$ ou $Mn_2O_3$) et oxyde de magnésium (MgO).

Lors de la pesée de l'oxyde de fer, il est nécessaire de compenser l'apport de fer dû à l'usure des éléments de broyage qui sont généralement des billes ou des barreaux d'acier.

Broyage des matières premières

Cette opération a pour double but de mélanger les différents constituants et de réduire leur taille de grains, les rendant ainsi plus réactifs.

Chamottage de la poudre

Ce traitement thermique a pour but de former en partie la phase cristalline recherchée. Cette opération peut typiquement être réalisée entre 750°C et 850°C selon la nature recherchée du matériau ferrite selon l'invention, sous air durant environ 2 heures.

Rebroyage du produit de chamottage

Cette opération est rendue nécessaire par le grossissement des grains de poudre induit par le chamottage. Elle est effectuée dans des conditions analogues à celles du premier broyage.

Ajout d'un fondant sous forme de $Bi_2O_3$ ou $V_2O_5$

Cette opération peut être réalisée après le second broyage, à sec ou en milieu humide, ou avant le second broyage en milieu humide. Elle a pour but l'obtention d'un mélange homogène de la poudre de ferrite et de l'oxyde fondant. L'oxyde fondant améliore la densification et abaisse la température de frittage.

Exemple 1 :

Des ferrites de composition $Ni_{0.234}Zn_{0.545}Cu_{0.2}Co_{0.02}Fe_{2-\delta}O_4$ ont été préparés selon le procédé décrit précédemment. Le coefficient δ représentant le défaut de fer dans la composition a été fixé respectivement à 0.035, 0.04 et 0.045 en ajustant la quantité d'oxyde de fer pesée au départ. La température de chamottage a été fixée à 800°C. Avant le second broyage, une quantité de 0.6% en poids d'oxyde de vanadium a été rajoutée. Le mélange obtenu après séchage a été compacté par pressage axial puis fritté à différentes températures.

Des densités élevées ont été obtenues pour des températures de frittage très basses comparé aux températures de frittage usuelles des ferrites de nickel-zinc-cuivre comme l'indique le tableau ci-dessous :

| coefficient $\delta$ | Température de frittage (°C) | Densité (g/cm$^3$) |
|---|---|---|
| 0.035 | 810 | 5.14 |
| 0.04 | 810 | 5.06 |
| 0.045 | 810 | 5.10 |

La perméabilité initiale complexe a été mesurée à l'aide d'un impédancemètre entre 1 MHz et 1 GHz à partir de tores usinés. Les résultats sont reportés sur la figure 2

La perméabilité à basse fréquence (f < 1 MHz) est comprise entre 220 et 230 pour une fréquence de résonance (maximum de $\mu''$) de 30MHz. Ces ferrites présentent très peu de pertes jusqu'à environ 5 MHz et sont donc bien adaptés pour la réalisation de transformateurs fonctionnant à haute fréquence.

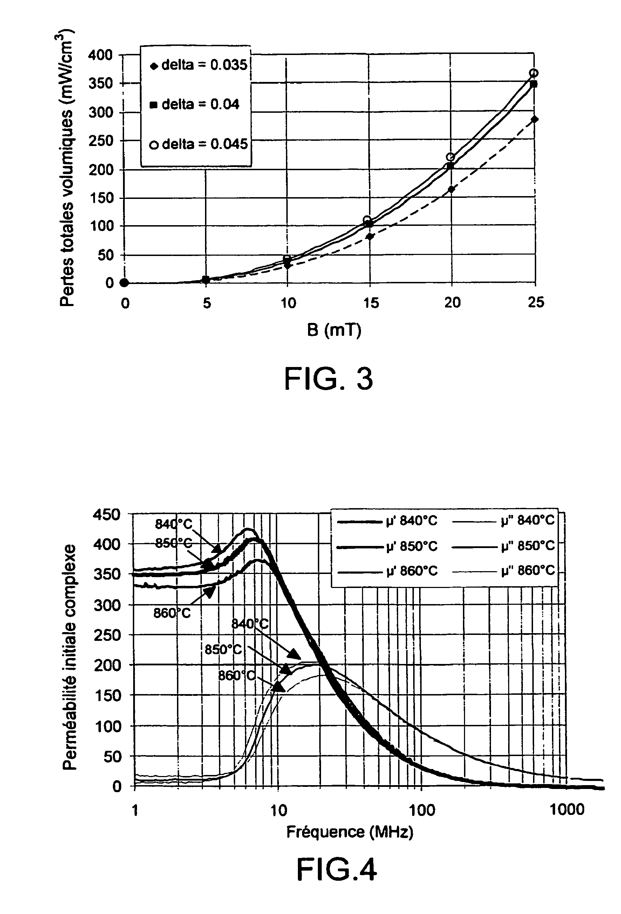

Les pertes totales volumiques ont également été mesurées à l'aide d'un Watt-mètre, à la fréquence de 1.5 MHz et en fonction de l'induction. Les résultats sont donnés en figure 3.

On observe que le défaut de fer influe peu sur les pertes totales et que le niveau de pertes pour tous nos échantillons est faible, compatible d'une utilisation en puissance à haute fréquence.

Exemple 2 :

Un ferrite de composition $Ni_{0.234}Zn_{0.545}Cu_{0.2}Co_{0.02}Fe_{2-\delta}O_4$ a été préparé selon le procédé décrit. Le coefficient $\delta$ représentant le défaut de fer dans la composition a été fixé à 0.0125 en ajustant la quantité d'oxyde de fer pesée au départ. La température de chamottage a été fixée à 800°C. Avant le second broyage, une quantité de 0.4% en poids d'oxyde de vanadium a été rajoutée. Le mélange obtenu après séchage a été compacté par pressage axial puis fritté à différentes températures.

Les densités obtenues en fonction de la température de frittage sont données dans le tableau ci-dessous :

| coefficient $\delta$ | Température de frittage (°C) | Densité (g/cm$^3$) |
|---|---|---|
| 0.0125 | 840 | 4.87 |
| 0.0125 | 850 | 4.97 |
| 0.0125 | 860 | 5.01 |

La perméabilité initiale complexe a été mesurée à l'aide d'un impédancemètre entre 1 MHz et 1 GHz à partir de tores usinés. Les résultats sont reportés sur la figure 4.

La perméabilité à basse fréquence (f < 1 MHz) est comprise entre 330 et 360 pour une fréquence de résonance (maximum de $\mu''$) de 20MHz. Ces ferrites présentent très peu de pertes jusqu'à environ 4 MHz et sont donc bien adaptés pour la réalisation de transformateurs fonctionnant à haute fréquence.

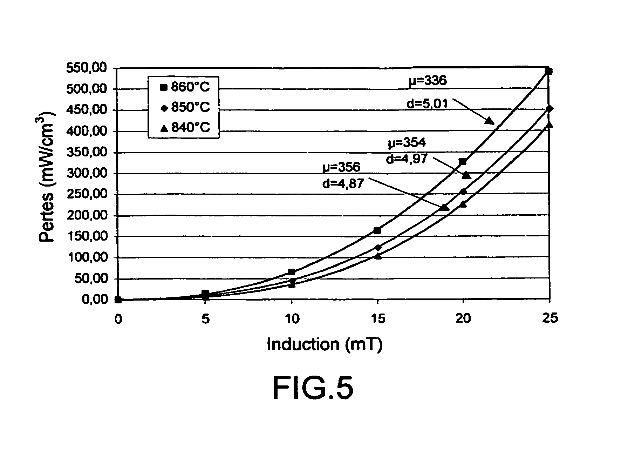

Les pertes totales volumiques ont également été mesurées à l'aide d'un Watt-mètre, à la fréquence de 1.5 MHz et en fonction de l'induction. Les résultats sont donnés en figure 5.

On observe que la température de frittage influe peu sur les pertes totales et que les pertes les plus basses sont obtenues pour un frittage à 840°C ce qui montre que l'on peut obtenir un matériau performant susceptible d'être cofritté à basse température. Le niveau de pertes pour les 3 échantillons est faible, compatible d'une utilisation en puissance à haute fréquence.

**Revendications**

1. Matériau composite comprenant un matériau ferrite de type spinelle à base de nickel et de zinc **caractérisé en ce que** :

   - le matériau ferrite répond à la formule chimique suivante :

$$Ni_xMn_yZn_zMg_mCu_wCo_\varepsilon Fe_{2-\delta}O_4$$

avec :

$$2(x+y+z+m+w+\varepsilon)+3(2-\delta)=8$$

$0 < x < 0,8$
$0 < \delta \leq 0,06$
$0,005 \leq \varepsilon \leq 0,1$
$0,05 \leq z \leq 0,6$
$0,005 < y < 0,1$
$0,005 < m < 0,1$
$0,1 < w < 0,25$ ;
le matériau composite comprenant en outre de l'oxyde de vanadium.

2. Matériau composite selon la revendication 1, **caractérisé en ce que** le ratio pondéral oxyde de vanadium / matériau ferrite est compris entre 0,2% est 1%.

3. Matériau composite selon l'une des revendications précédentes, **caractérisé en ce que** $\varepsilon$ est compris entre environ 0,01 et 0,02.

4. Matériau composite selon l'une des revendications précédentes, **caractérisé en ce que** y est compris entre environ 0,01 et 0,05.

5. Matériau composite selon l'une des revendications précédentes, **caractérisé en ce que** w est compris entre environ 0,15 et 0,20.

6. Composant magnétique, **caractérisé en ce qu'**il comprend un noyau magnétique en matériau composite ferrite selon l'une des revendications 1 à 5.

7. Composant magnétique de type transformateur ou inductance selon la revendication 6, **caractérisé en ce que** le noyau magnétique est bobiné avec du cuivre émaillé ou du conducteur coaxial.

8. Composant magnétique selon la revendication 7, **caractérisé en ce qu'**il fonctionne pour une induction comprise entre environ 0 et 50 mTesta dans une gamme de fréquence de l'ordre de 1 à 100 MégaHertz.

9. Alimentation à découplage **caractérisée en ce qu'**elle comprend un composant magnétique selon l'une des revendications 7 ou 8.

10. Inductance **caractérisée en ce qu'**elle comprend un assemblage de couches de matériau ferrite selon l'une des revendications 1 à 5 et de pistes métalliques cofrittés.

11. Transformateur multicouches **caractérisé en ce qu'**il comprend un assemblage de couches de ferrite selon l'une des revendications 1 à 5 et de pistes métalliques cofrittés.

12. Inductance selon la revendication 10, **caractérisée en ce que** les pistes métalliques sont en argent.

13. Inductance selon la revendication 10, **caractérisée en ce que** les pistes métalliques sont en cuivre.

14. Transformateur selon la revendication 11, **caractérisé en ce que** les pistes métalliques sont en argent.

15. Transformateur selon la revendication 11, **caractérisé en ce que** les pistes métalliques sont en cuivre.

**Claims**

1. A composite material, comprising a ferrite material of the spinel type based on nickel and zinc, **characterised in that**:

    - the ferrite material corresponds to the following chemical formula:

$$Ni_xMn_yZn_zMg_mCu_wCo_\varepsilon Fe_{2-\delta}O_4$$

with:

$$2(x+y+z+m+w+\varepsilon)+3(2-\delta)=8$$

$0<x<0.8$
$0<6\leq0.06$
$0.005\leq\varepsilon\leq0.1$
$0.05\leq z\leq 0.6$
$0.005<y<0.1$
$0.005 <m<0.1$
$0.1<w<0.25;$
said composite material further comprising vanadium oxide.

2. The composite material according to claim 1, **characterised in that** the weight ratio of vanadium oxide / ferrite material is between 0.2 % and 1 %.

3. The composite material according to any one of the preceding claims, **characterised in that** $\varepsilon$ is between approximately 0.01 and 0.02.

4. The composite material according to any one of the preceding claims, **characterised in that** y is between approximately 0.01 and 0.05.

5. The composite material according to any one of the preceding claims, **characterised in that** w is between approximately 0.15 and 0.20.

6. A magnetic component, **characterised in that** it comprises a magnetic core made from a ferrite composite material according to any one of claims 1 to 5.

7. A magnetic component, of the transformer or inductor type, according to claim 6, **characterised in that** the magnetic core is wound with enamelled copper wire or with coaxial conducting wire.

8. The magnetic component according to claim 7, **characterised in that** it operates for an induction of between approximately 0 and 50 mTesla within a frequency range of the order of 1 to 100 MegaHertz.

9. A decoupling supply, **characterised in that** it comprises a magnetic component according to any one of claims 7 to 8.

10. An inductor, **characterised in that** it comprises an assembly of layers of ferrite material, according to any one of claims 1 to 5, and co-sintered metal tracks.

11. A multi-layer transformer, **characterised in that** it comprises an assembly of ferrite layers, according to any one of claims 1 to 5, and co-sintered metal tracks.

12. The inductor according to claim 10, **characterised in that** the metal tracks are made from silver.

13. The inductor according to claim 10, **characterised in that** the metal tracks are made from copper.

14. The transformer according to claim 11, **characterised in that** the metal tracks are made from silver.

15. The transformer according to claim 11, **characterised in that** the metal tracks are made from copper.

**Patentansprüche**

1. Verbundmaterial, das ein Ferritmaterial des Spinelltyps auf Nickel- und Zinkbasis umfasst, **dadurch gekennzeichnet, dass**:

- das Ferritmaterial der folgenden chemischen Formel entspricht:

$$Ni_xMn_yZn_zMg_mCu_wCo_\varepsilon Fe_{2-\delta}O_4$$

wobei:

$$2(x+y+z+m+w+\varepsilon)+3(2-\delta)=8$$

$0<x<0,8$
$0<\delta\leq0,06$
$0,005\leq\varepsilon\leq0,1$
$0,05\leq z\leq0,6$
$0,005<y<0,1$
$0,005<m<0,1$
$0,1<w<0,25;$
wobei das Verbundmaterial ferner Vanadiumoxid umfasst.

2. Verbundmaterial nach Anspruch 1, **dadurch gekennzeichnet, dass** das Gewichtsverhältnis zwischen Vanadiumoxid und Ferritmaterial zwischen 0,2 % und 1 % liegt.

3. Verbundmaterial nach einem der vorherigen Ansprüche, **dadurch gekennzeichnet, dass** $\varepsilon$ zwischen etwa 0,01 und 0,02 liegt.

4. Verbundmaterial nach einem der vorherigen Ansprüche, **dadurch gekennzeichnet, dass** y zwischen etwa 0,01 und 0,05 liegt.

5. Verbundmaterial nach einem der vorherigen Ansprüche, **dadurch gekennzeichnet, dass** w zwischen etwa 0,15 und 0,20 liegt.

6. Magnetische Komponente, **dadurch gekennzeichnet, dass** sie einen Magnetkern aus einem Ferritverbundmaterial nach einem der Ansprüche 1 bis 5 umfasst.

7. Magnetische Komponente des Transformator- oder Induktortyps nach Anspruch 6, **dadurch gekennzeichnet, dass** der Magnetkern mit emailliertem Kupferdraht oder mit einem koaxialen leitenden Draht umwickelt ist.

8. Magnetische Komponente nach Anspruch 7, **dadurch gekennzeichnet, dass** sie für eine Induktion zwischen etwa 0 und 50 mTesta in einem Frequenzbereich von etwa 1 bis 100 MHz ausgelegt ist.

9. Entkopplungsstromversorgung, **dadurch gekennzeichnet, dass** sie eine magnetische Komponente nach Anspruch 7 oder 8 umfasst.

10. Drosselspule, **dadurch gekennzeichnet, dass** sie mehrere Lagen aus Ferritmaterial nach einem der Ansprüche 1 bis 5 und gemeinsam gesinterte Metallbahnen aufweist.

11. Mehrlagiger Transformator, **dadurch gekennzeichnet, dass** er mehrere Ferritlagen nach einem der Ansprüche 1 bis 5 und gemeinsam gesinterte Metallbahnen umfasst.

12. Drosselspule nach Anspruch 10, **dadurch gekennzeichnet, dass** die Metallbahnen aus Silber bestehen.

13. Drosselspule nach Anspruch 10, **dadurch gekennzeichnet, dass** die Metallbahnen aus Kupfer bestehen.

14. Transformator nach Anspruch 11, **dadurch gekennzeichnet, dass** die Metallbahnen aus Silber bestehen.

15. Transformator nach Anspruch 11, **dadurch gekennzeichnet, dass** die Metallbahnen aus Kupfer bestehen.

FIG.1

FIG.2

FIG. 3

FIG.4

FIG.5

**EP 1 842 837 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0800183 A